# EUROPÄISCHE PATENTANMELDUNG

(11) **EP 3 561 037 A1**
(43) Veröffentlichungstag der Anmeldung: **30.10.2019**
(21) Anmeldenummer: 19169224.3
(22) Anmeldetag: 15.04.2019
(51) Int. Cl.: C12G 3/06

(54) **VERFAHREN ZUR HERSTELLUNG VON SPIRITUOSEN MIT KÜRBISKERNAROMA**

(30) Priorität: 25.04.2018 AT 503462018
(71) Anmelder: Horwath, Robert, 8044 Graz (AT)
(72) Erfinder: Horwath, Robert, 8044 Graz (AT)
(74) Vertreter: Bachinger-Fuchs, Eva-Maria

(57) **Zusammenfassung**

Bei einem Verfahren zur Herstellung von Spirituosen mit Kürbiskemaroma wird eine Ausgangsspirituose mit einem Alkoholgehalt von etwa 35-95 Vol.% mit Kürbiskernöl und/oder Kürbiskempresskuchen und/oder gemahlenen und gerösteten Kürbiskernen vermischt, das Gemisch wird mazeriert, nach der Mazeration derart abgekühlt, dass das Kürbiskernöl erstarrt, und das erstarrte Kürbiskernöl wird danach von der flüssigen Spirituose abgetrennt. Auf diese Weise wird eine Spirituose ohne Kürbiskemölrückstände erhalten.

## Beschreibung

Die Erfindung betrifft ein Verfahren zur Herstellung von Spirituosen mit Kürbiskernaroma sowie eine nach diesem Verfahren erhältliche oder hergestellte Spirituose, insbesondere einen Geist mit Kürbiskernaroma.

Eine Vielzahl von Spirituosen wird auf der Basis von Früchten, Gemüsen, Nüssen oder Kräutern hergestellt. Dabei erfolgt in der Regel zuerst eine alkoholische Gärung, gefolgt von einer anschließenden Destillation, wobei als Rohstoff zucker- oder stärkehaltiges Material eingesetzt werden kann. Im Fall von stärkehaltigen Stoffen muss die Stärke allerdings zuvor mithilfe von Enzymen in Maltose und Glucose gespalten werden, damit letztere vergärt werden kann. Bei der alkoholischen Gärung selbst wandeln Hefen den Zucker in Alkohol und Kohlendioxid um, wobei ein Gemisch mit einem Alkoholgehalt von etwa 8-9 Vol.% entsteht. Durch Brennen, d.h. Destillieren, des Gemisches wird dann das gewünschte Produkt erzeugt.

Bei Obstbränden oder sogenannten Obstwässern, wie z.B. Kirschwasser, wird der gesamte Alkohol aus fruchteigenem Zucker gewonnen, d.h. es handelt sich um reine Fruchtdestillate. Für diverse Ausgangsmaterialien ist ein solches Verfahren aber nicht geeignet, da sie zu wenig Zucker enthalten, z.B. Himbeeren oder auch Nüsse. Aus solchen Ausgangsmaterialien werden deshalb oft sogenannte Geiste hergestellt, wobei das Ausgangsmaterial hier in hochprozentigem Neutralalkohol eingemaischt und nach einer geeigneten Kontaktdauer destilliert wird.

Die Herstellung solcher Geister hat sich für eine Vielzahl zuckerarmer Ausgangsmaterialien als geeignet erwiesen, bei manchen Rohstoffen stehen dieser Art der Spirituosenerzeugung jedoch verschiedene Hindernisse im Weg. Beispielsweise bleiben manche Aromen beim Brennen nicht bzw. nur sehr schwach erhalten oder es entstehen sogar unerwünschte Geschmackskomponenten.

In der DE 10 2004 043 972 A1 wird ein Verfahren zur Herstellung eines Haselnussgeistes beschrieben, bei dem geröstete Haselnüsse mit Alkohol überschichtet, nach einer Kontaktdauer von einigen Wochen zu einer breiigen Masse zerkleinert und danach destilliert werden.

Kürbiskerne besitzen einen hohen Fettgehalt und anders als Haselnüsse, Mandeln oder die meisten anderen Nüsse und essbaren Samen weist das aus gerösteten Kürbiskernen gewonnene Öl eine intensive, meist grünlich-braune Färbung auf.

Möchte man den Geschmack und andere vorteilhafte Eigenschaften von Kürbiskernen zum Genuss in Form einer Spirituose, z.B. eines Geists, bereitstellen, sieht man sich jedoch mit dem Problem konfrontiert, dass sich der Ölanteil der Kerne nach dem Ziehenlassen in Alkohol nur schwer und meist ungenügend abtrennen lässt und die dunkle Farbe des Öls der Spirituose ein eher unansehnliches Aussehen verleiht. Aus diesem Grund wurde bisher meist Abstand von der Herstellung von Spirituosen mit Kürbiskernaroma genommen.

In der RU 2167929 C1 ist ein Wodka geoffenbart, der mit einer aus Kürbiskernen und Presskuchen hergestellten wässrig-alkoholischen Aufgusslösung sowie Vanille und Honig aromatisiert wird.

Das US-Patent Nr. 2,787,547 A beschreibt ein Verfahren zur Klärung von modrigem, öligem Whiskey, wobei der Whiskey mit destilliertem Wasser versetzt und erwärmt wird, wonach die öligen Verunreinigungen durch Zusatz von Speiseöl gelöst und das Öl danach durch Abkühlen auf etwa -9°C zum Erstarren gebracht wird. Der Whiskey kann anschließend durch Ablassen aus dem Fass von dem an der Oberfläche erstarrten Öl abgetrennt werden.

Die vorliegende Erfindung bezweckt die Überwindung des oben genannten Problems und stellt sich die Aufgabe, ein Verfahren zur Herstellung von Spirituosen mit Kürbiskernaroma bereitzustellen, welches es ermöglicht, eine komplette Trennung von Öl und Alkohol zu erreichen und eine Spirituose mit Kürbiskernaroma von optisch ansprechender Farbe zu erhalten. Ferner soll eine Spirituose mit Kürbiskernaroma, insbesondere ein Geist mit Kürbiskernaroma, bereitgestellt werden.

Diese Aufgabe wird bei einem Verfahren zur Herstellung von Spirituosen mit Kürbiskernaroma erfindungsgemäß dadurch gelöst, dass eine Ausgangsspirituose mit einem Alkoholgehalt von etwa 35-95 Vol.%, vorzugsweise 35-45 Vol.%, mit Kürbiskernöl und/oder Kürbiskernpresskuchen und/oder gemahlenen und gerösteten Kürbiskernen vermischt wird, das Gemisch mazeriert wird, das Gemisch nach der Mazeration derart abgekühlt wird, dass das Kürbiskernöl erstarrt, und das erstarrte Kürbiskernöl danach von der flüssigen Spirituose abgetrennt wird.

Gemäß der Erfindung werden in einem ersten Schritt die Ausgangsspirituose, z.B. Kornbrand, und der geschmacksgebende Stoff, also Kürbiskernöl und/oder Kürbiskernpresskuchen und/oder gemahlene und geröstete Kürbiskerne, vermischt. Vorzugsweise handelt es sich bei der Ausgangsspirituose um einen klaren, geschmacksneutralen Alkohol, es können jedoch auch Destillate mit Eigengeschmack oder Alkohole mit anderen Aromastoffen verwendet werden. Auch farbige und opake Ausgangspirituosen sind denkbar, wenn dies in Bezug auf das Endprodukt gewünscht ist.

Das Kürbiskernöl und/oder der Kürbiskernpresskuchen und/oder die gemahlenen und gerösteten Kürbiskerne wird/werden in einer Menge von 20-300 g/l zur Ausgangsspirituose hinzugefügt. Eine Menge von 50-60 g/l hat sich als besonders geeignet erwiesen. Bei Verwendung einer größeren Menge an Geschmacksträgern erhöht sich naturgemäß auch der Aufwand für das Erstarrenlassen des Kürbiskernöls. Die angegebene Menge stellt somit einen guten Kompromiss zwischen Verfahrenseffizienz und Aromaqualität dar.

Um die Mazeration zu unterstützen, bei der es sich um ein physikalisches Verfahren handelt, bei dem ein meist zerkleinerter Ausgangsstoff insgesamt oder an der Oberfläche einige Zeit der Einwirkung einer Flüssigkeit wie zum Beispiel Wasser, Öl oder Alkohol ausgesetzt wird, wobei der Ausgangsstoff als solcher nicht gelöst, sondern nur lösliche Bestandteile davon in die als Lösemittel dienende Flüssigkeit übergehen, wird das Gemisch aus Alkohol und Kürbiskernaroma-Ausgangsstoff vorzugsweise regelmäßig, z.B. mehrmals täglich, insbesondere durch Schütteln durchmischt, da es durch das nach oben aufschwimmende Öl leicht zu einer Phasentrennung kommt.

Die Mazeration wird zweckmäßigerweise bei Raumtemperatur durchgeführt. Eine höhere Temperatur, also ein Erwärmen oder Erhitzen des Gemisches, ist in der Regel nicht erforderlich und kann unter Umständen sogar kontraproduktiv sein, da zahlreiche Aromastoffe hitzeempfindlich sind. Es sollte aber im Gegenzug darauf geachtet werden, dass die Temperatur nicht zu niedrig ist, da sonst das Lösen bzw. Auslaugen der gewünschten Bestandteile verlangsamt oder gehemmt werden könnte.

Um ein merkbares und ausgewogenes Kürbiskernaroma zu erhalten, ist es bevorzugt, das Gemisch mindestens 7 Tage zu mazerieren. Je nach gewünschter Intensität kann die Mazeration jedoch ohne weiteres für einen längeren Zeitraum, z.B. 7-16 Tage, fortgesetzt werden.

Hat das Gemisch bzw. der Alkohol die gewünschte Aromaintensität erreicht, wird es derart abgekühlt, dass das Kürbiskernöl erstarrt. Der Erstarrungspunkt von Kürbiskernöl liegt etwa bei -15°C bis -16°C, eine Verfestigung des Öls setzt aber bereits bei etwas höheren Temperaturen ein. Zweckmäßigerweise wird das mazerierte Gemisch auf eine Temperatur von -4°C bis -50°C, vorzugsweise -16°C bis -22°C abgekühlt, so dass das Kürbiskernöl erstarrt bzw. gefriert und an der Oberfläche des Gemisches, d.h. über der Alkoholphase, eine feste Schicht bildet. Diese kann dann relativ einfach von der flüssigen Spirituose abgetrennt werden.

In einer bevorzugten Ausführungsform wird das Verfahren in einem Behälter, vorzugsweise einem Glasballon, mit Ablaufhahn durchgeführt, wobei die flüssige Spirituose vom erstarrten Kürbiskernöl durch Ablassen aus dem Behälter abgetrennt wird.

Um eventuell noch vorhandene feste Rückstände abzutrennen, wird die vom erstarrten Kürbiskernöl abgetrennte flüssige Spirituose vorzugsweise filtriert, z.B. mittels eines herkömmlichen Schichtenfilters.

In einem weiteren Aspekt wird die der Erfindung zugrundeliegende Aufgabe durch eine Spirituose mit Kürbiskernaroma gelöst, welche einen Alkoholgehalt von 35-95 Vol.%, vorzugsweise 35-45 Vol.%, aufweist, und durch das oben beschriebene erfindungsgemäße Verfahren erhältlich ist.

Gemäß einem anderen Aspekt wird die Aufgabe durch eine Spirituose mit Kürbiskernaroma gelöst, welche durch ein Verfahren hergestellt wurde, das die folgenden Schritte umfasst:
(a) Vermischen von Kürbiskernöl und/oder Kürbiskernpresskuchen und/oder gemahlenen und gerösteten Kürbiskernen mit einer Ausgangsspirituose mit einem Alkoholgehalt von etwa 35-95 Vol.%, vorzugsweise 35-45 Vol.%;
(b) Mazerieren des Gemischs von Kürbiskernöl und/oder Kürbiskernpresskuchen und/oder gemahlenen und gerösteten Kürbiskernen und Ausgangsspirituose;
(c) Abkühlen des Gemischs derart, dass das Kürbiskernöl erstarrt; und
(d) Abtrennen des erstarrten Kürbiskernöls von der flüssigen Spirituose.

Bezüglich der Ausgangsspirituose, der Menge des geschmacksgebenden Stoffes, der Mazerationsbedingungen sowie der anderen Verfahrensparameter finden die oben beschriebenen Ausführungsformen ebenfalls Anwendung.

Vorzugsweise wird die flüssige Spirituose nach Schritt (d) filtriert, um feste Rückstände zu entfernen.

In einer bevorzugten Ausführungsform des erfindungsgemäßen Verfahrens wird die flüssige Spirituose nach dem Abtrennen des erstarrten Kürbiskernöls bzw. Schritt (d) oder nach der Filtration zwecks Erzeugung eines Geists destilliert. Alternativ kann die Destillation aber auch schon vor der Abkühlung des mazerierten Gemisches (also vor Schritt (c) des Verfahrens) durchgeführt werden.

Die Erfindung wird nachfolgend anhand eines Beispiels sowie der Zeichnung näher erläutert.

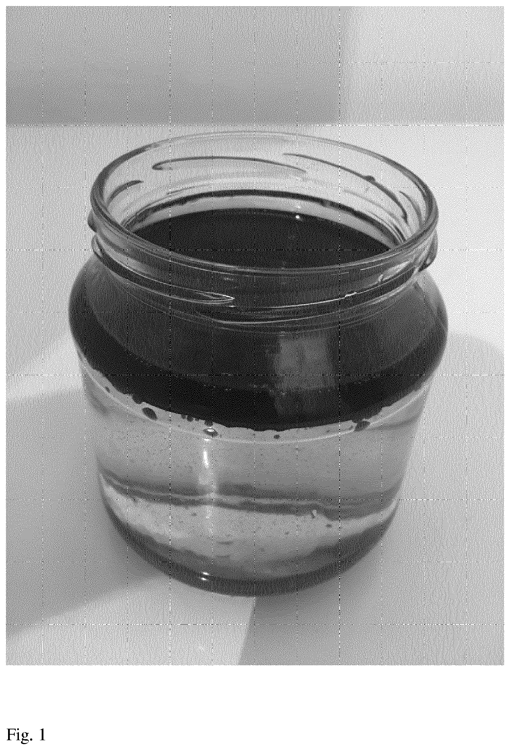

**Fig. 1** zeigt die Abbildung eines Mazerationsgefäßes, in dem die Ausgangsspirituose und das Kürbiskernöl noch unvermischt, d.h. in zwei Phasen, vorliegen.

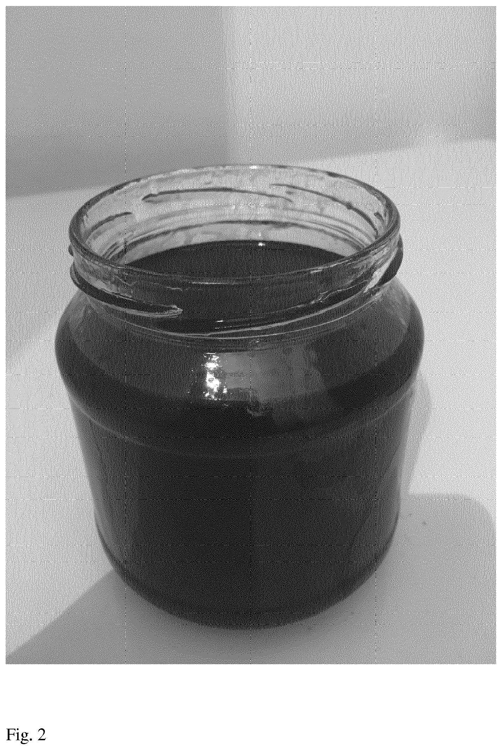

**Fig. 2** zeigt die Abbildung eines Mazerationsgefäßes, in dem die Ausgangsspirituose und das Kürbiskernöl vermischt vorliegen.

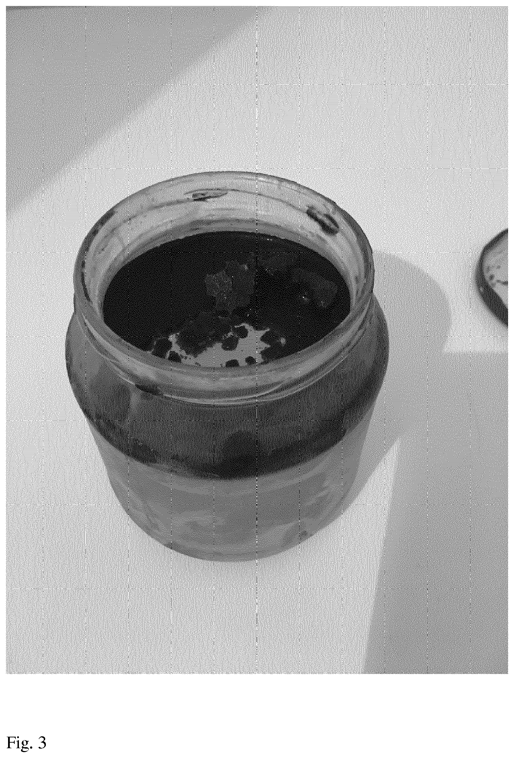

**Fig. 3** zeigt die Abbildung eines Mazerationsgefäßes, nach dem das Gemisch abgekühlt wurde und das Kürbiskernöl erstarrt ist. Das aufgeschwommene Öl bildet eine feste Schicht, die nun von der flüssigen Spirituose abgetrennt werden kann.

### Beispiel

In einem 20 l - Glasballon mit Ablaufhahn wurden etwa 1000 g (1 Liter) Kürbiskernöl und 19 Liter Kornbrand (38 Vol.% Alkohol) vermischt, wobei sich eine bräunliche Flüssigkeit (Emulsion) bildete, welche sich nach einiger Ruhezeit wieder in Alkohol und obenauf schwimmendes Kürbiskernöl separierte.

Der Glasballon wurde 14 Tage lang zur Mazeration des Gemisches bei Raumtemperatur stehengelassen, wobei er mehrmals täglich geschüttelt wurde.

Nach der 14-tägigen Mazerationszeit wurde der Glasballon auf eine Temperatur von etwa -18°C bis - 20°C gekühlt, wodurch das Kürbiskernöl an der Oberfläche des Gemisches zu erstarren begann.

Sobald das Kürbiskernöl erstarrt bzw. gefroren war, wurde der mit Kürbiskernöl aromatisierte, klare und grünlich-gelbe Alkohol durch den Ablaufhahn abgelassen.

Nach Filtration durch einen Schichtenfilter zur Entfernung von gefrorenen Kürbiskernölrückständen wurde der abgelassene Alkohol, der öl- und rückstandsfrei war, destilliert. Der erhaltene klare Geist wies ein angenehmes Kürbiskernölaroma auf.

## Patentansprüche

1. Verfahren zur Herstellung von Spirituosen mit Kürbiskernaroma, **dadurch gekennzeichnet, dass** eine Ausgangsspirituose mit einem Alkoholgehalt von etwa 35-95 Vol.%, vorzugsweise 35-45 Vol.%, mit Kürbiskernöl und/oder Kürbiskernpresskuchen und/oder gemahlenen und gerösteten Kürbiskernen vermischt wird, das Gemisch mazeriert wird, das Gemisch nach der Mazeration derart abgekühlt wird, dass das Kürbiskernöl erstarrt, und das erstarrte Kürbiskernöl danach von der flüssigen Spirituose abgetrennt wird.

2. Verfahren nach Anspruch 1, **dadurch gekennzeichnet, dass** das Kürbiskernöl und/oder der Kürbiskernpresskuchen und/oder die gemahlenen und gerösteten Kürbiskerne in einer Menge von 20-300 g/l, vorzugsweise 50-60 g/l, zur Ausgangsspirituose hinzugefügt wird/werden.

3. Verfahren nach Anspruch 1 oder 2, **dadurch gekennzeichnet, dass** das Gemisch mindestens 7 Tage, vorzugsweise 7-16 Tage, mazeriert wird.

4. Verfahren nach einem der Ansprüche 1 bis 3, **dadurch gekennzeichnet, dass** das mazerierte Gemisch auf eine Temperatur von -4 bis -50°C, vorzugsweise -16 bis -22°C, abgekühlt wird.

5. Verfahren nach einem der Ansprüche 1 bis 4, **dadurch gekennzeichnet, dass** es in einem Behälter, vorzugsweise einem Glasballon, mit Ablaufhahn durchgeführt wird, wobei die flüssige Spirituose vom erstarrten Kürbiskernöl durch Ablassen aus dem Behälter abgetrennt wird.

6. Verfahren nach einem der Ansprüche 1 bis 5, **dadurch gekennzeichnet, dass** die vom erstarrten Kürbiskernöl abgetrennte flüssige Spirituose filtriert wird.

7. Spirituose mit Kürbiskernaroma, welche einen Alkoholgehalt von 35-95 Vol.%, vorzugsweise 35-45 Vol.%, aufweist, erhältlich durch ein Verfahren nach einem der Ansprüche 1 bis 6.

8. Spirituose mit Kürbiskernaroma, hergestellt durch ein Verfahren, das die folgenden Schritte umfasst:
(a) Vermischen von Kürbiskernöl und/oder Kürbiskernpresskuchen und/oder gemahlenen und gerösteten Kürbiskernen mit einer Ausgangsspirituose mit einem Alkoholgehalt von etwa 35-95 Vol.%, vorzugsweise 35-45 Vol.%;
(b) Mazerieren des Gemischs von Kürbiskernöl und/oder Kürbiskernpresskuchen und/oder gemahlenen und gerösteten Kürbiskernen und Ausgangsspirituose;
(c) Abkühlen des Gemischs derart, dass das Kürbiskernöl erstarrt; und
(d) Abtrennen des erstarrten Kürbiskernöls von der flüssigen Spirituose.

9. Spirituose nach Anspruch 8, **dadurch gekennzeichnet, dass** die flüssige Spirituose nach Schritt (d) des Verfahrens filtriert wird.

10. Spirituose nach Anspruch 8 oder 9, **dadurch gekennzeichnet, dass** die flüssige Spirituose nach Schritt (d) des Verfahrens zwecks Erzeugung eines Geists destilliert wird.
